# FASCICULE DE BREVET EUROPEEN

(11) **EP 1 163 504 B1**
(45) Date de publication et mention de la délivrance du brevet: **19.01.2005**
(21) Numéro de dépôt: 00905130.1
(22) Date de dépôt: 14.02.2000
(51) Int. Cl.: G01N 21/65

(54) **PROCEDE DE PREPARATION DE LATEX PAR (CO)POLYMERISATION EN EMULSION DE MONOMERES ETHYLENIQUEMENT INSATURES, AVEC SUIVI DIRECT EN LIGNE PAR SPECTROSCOPIE RAMAN, ET DISPOSITIF POUR LA MISE EN OEUVRE DU PROCEDE**
VERFAHREN ZUR HERSTELLUNG VON LATEX DURCH EMULSIONS(CO)POLYMERISATION ETHYLENISCH UNGESÄTTIGTER MONOMERE MIT DIREKTER IN-LINE-KONTROLLE DURCH RAMAN-SPEKTROSKOPIE, UND VORRICHTUNG ZUR DURCHFÜHRUNG DES VERFAHRENS
METHOD OF MANUFACTURING LATEX BY (CO)POLYMERISATION IN AN EMULSION OF ETHYLENICALLY UNSATURATED MONOMERS, WITH ON-LINE MONITORING USING RAMAN SPECTROSCOPY, AND APPARATUS FOR CARRYING OUT THE METHOD

(30) Priorité: 18.02.1999 FR 9902011
(43) Date de publication de la demande: 19.12.2001
(73) Titulaire: Ciba Specialty Chemicals Holding Inc., 4057 Basel (CH)
(72) Inventeur: AGNELY, Mathias, F-75013 Paris (FR); AMRAM, Bruno, 94200 Ivry-sur-Seine (FR); ARMITAGE, Phil, D., Shipley, Bradford BD18 4DS (GB); CHARMOT, Dominique, Los Gatos, CA 95032 (US); DROCHON, Bruno, F-93160 Noisy-le-Grand (FR); PERE, Eve, F-64140 Lons (FR)
(74) Mandataire: Blot, Philippe Robert Emile
(86) Numéro de dépôt international: PCT/FR2000/000360
(87) Numéro de publication internationale: WO 2000/049395

(56) Documents cités:
- EP-A- 0 567 214
- FENG L AND NG K Y S: "Characterization of styrene polymerization in microemulsion by Raman spectroscopy" COLLOIDS AND SURFACES, vol. 53, no. 3-4, 1991, pages 349-361, XP002120792
- CLAYBOURN M ET AL: "Analysis of Processes in Latex Systems by Fourier Transform Raman Spectroscopy" JOURNAL OF RAMAN SPECTROSCOPY, vol. 25, 1994, pages 123-129, XP002069189
- CHANG S Y AND NAM S W: "Monitoring Polymerization Reactions by Near-IR Spectroscopy" ACS SYMPOSIUM SERIES: MULTIDIMENSIONAL SPECTROSCOPY OF POLYMERS, vol. 598, 1995, pages 147-165, XP002120793
- VIVARAT-PERRIN M -P: "LE SPECTROMETRE RAMAN S'INSTALLE EN LIGNE, A 200 M DES CAPTEURS" MESURES REGULATION AUTOMATISME, no. 704, 1 avril 1998 (1998-04-01), pages 63-66, XP000780554 ISSN: 0755-219X
- ADAR F ET AL: "RAMAN SPECTROSCOPY FOR PROCESS/QUALITY CONTROL" APPLIED SPECTROSCOPY REVIEWS, vol. 32, no. 1/02, 1997, pages 45-101, XP000695107 ISSN: 0570-4928
- SAWATZKI J: "FT-Raman-Spektroskopie in-line" CLB CHEMIE IN LABOR UND BIOTECHNIK, vol. 50, no. 9, 1999, pages 333-335, XP002120794

## Description

La présente invention a pour objet un nouveau procédé de préparation de latex par (co)polymérisation en émulsion de monomères éthyléniquement insaturés, dans lequel le suivi direct en ligne de la (co)polymérisation est effectué par spectroscopie Raman.

Les compositions à base de latex susceptibles d'être obtenus par le procédé de (co)polymérisation en émulsion dont le suivi en ligne est réalisé par spectroscopie Raman, constituent le deuxième objet de l'invention.

Enfin, le troisième objet de l'invention concerne un dispositif pour la mise en oeuvre du procédé précité, ce dispositif comprenant un réacteur, au moins une sonde optique, un spectromètre Raman, des fibres optiques, un calculateur et un automate de régulation.

Les compositions à base de latex sont utilisées dans de nombreuses industries notamment dans celles des peintures, des revêtements, des adhésifs, des textiles, et du couchage de papier. Parmi les procédés de préparation de latex, la (co)polymérisation en émulsion est le procédé le plus couramment utilisé.

Les propriétés du (co)polymère formant le latex sont étroitement liées à sa composition chimique globale, mais également à ses caractéristiques macromoléculaires telles que la microstructure des chaînes, leur hétérogénéité de composition chimique, leur distribution en masse moléculaire, et la fraction de (co)polymère éventuellement réticulé. Les propriétés nécessaires et recherchées sont bien entendu différentes selon le domaine d'application des latex. A titre d'exemples, les propriétés recherchées sont pour le couchage du papier, la résistance à l'arrachage sec, la résistance à l'arrachage humide et la résistance au cloquage des papiers couchés, pour l'enduction de tapis et moquettes, la résistance mécanique et la souplesse, pour les adhésifs, le pouvoir adhésif et la résistance au cisaillement, pour les peintures, la résistance à l'abrasion humide, la résistance au collage (*blocking*) et la température de filmification.

Il est donc important de pouvoir mettre en oeuvre un procédé pour préparer un latex qui permette d'obtenir celui-ci avec une composition chimique globale prédéfinie à l'avance mais également avec des caractéristiques prédéfinies pour assurer et anticiper son utilisation future dans un domaine d'application.

De ce fait, la reproductibilité du procédé d'une opération à une autre (batch à batch) est un élément clé pour garantir à l'utilisateur du latex un niveau de performance constant pour celui-ci. La reproductibilité du procédé et la qualité constante du latex obtenu sont garanties en suivant les consignes de procédé et en identifiant les paramètres critiques de celui-ci ; on peut s'aider pour cela, de méthodologie comme la Maîtrise Statistique des Procédés. Pour que celle-ci soit d'autant plus efficace il faut pouvoir disposer d'indicateurs pertinents de la polymérisation et de préférence d'indicateurs mesurables pendant le procédé et non pas après le procédé de façon à pouvoir corriger des situations de dérive. Il existe donc un besoin de disposer de technique de suivi en ligne de la polymérisation.

L'article de Feng et al. (Colloids and Surfaces, vol.53, n°3-4, 1991, p.349-361) rapporte l'utilisation de spectroscopie Raman *in situ* pour l'étude de la polymérisation de styrène en microémulsion. La concentration en styrène est calculée à partir de l'aire de la raie associée à la vibration d'étirement de la liaison C=C à 1631 cm⁻¹.

On connaît de l'article de M.P. Vivarat-Perrin (Mesures, Régulation, Automatisme n° 704, 1 Avril 1998, p.63-66) une installation de purification de p-xylène dans laquelle la concentration de plusieurs composés est suivie simultanément par spectroscopie Raman.

L'ouvrage de F. Adar et al. « Raman Spectroscopy for Process/Quality Control, Applied Spectroscopy Reviews, vol.32 n° 1/02, 1997, p .45-101 enseigne la possibilité d'utiliser la spectroscopie Raman dans le cadre de procédés de polymérisation.

On sait définir les paramètres réactionnels de procédé de préparation de latex par (co)polymérisation pour essayer d'obtenir un latex aux propriétés adéquates en regard de son utilisation : par exemple en définissant les profils de températures et l'addition des réactifs tels que les monomères au cours de la réaction. Ces paramètres réactionnels ainsi définis conduisent généralement à un profil de vitesse de (co)polymérisation qui conditionnent les caractéristiques du latex obtenu.

Toutefois, il apparaît qu'au plan industriel le respect des paramètres de procédé (température, profil d'alimentation des monomères, pression, etc..) ne garantit pas une reproductibilité absolue dudit procédé et donc l'obtention de latex de qualités prédéfinies et adéquates en regard de leur future utilisation. En effet le profil de vitesse de réaction peut être affecté par d'autres facteurs tels que les impuretés contenues dans les réactifs [eau, monomère(s), tensio-actif(s), etc.], la fluctuation de vitesse d'agitation , l'état de surface du réacteur, la fluctuation de taille des particules, etc..

Etant donné l'enjeu économique et industriel important des latex, il y a un intérêt très important à disposer d'un procédé optimisé de (co)polymérisation en émulsion pour leur préparation, qui garantit avant tout, à l'utilisateur, un niveau de performance constant conféré par des latex aux propriétés prédéfinies. Un tel procédé doit donc présenter une reproductibilité améliorée.

A ces fins, il a maintenant été mis au point, et c'est ce qui constitue le premier objet de la présente invention, un nouveau procédé optimisé de préparation de latex présentant une reproductibilité améliorée et, en outre, facile à mettre en oeuvre, de coût de fabrication acceptable, et utilisable à échelle industrielle. Ce procédé de préparation par (co)polymérisation en émulsion d'au moins une espèce de monomères éthyléniquement insaturés est effectué par un suivi en continu *in situ* de la (co)polymérisation comprenant les étapes suivantes :
(i) on émet dans l'émulsion un rayonnement lumineux incident compris dans la bande spectrale située entre 200 nm et 1400 nm, et de préférence entre 700 nm et 1400 nm,

(ii) on capte et on transmet à un spectromètre Raman la lumière diffusée par le milieu réactionnel,
(iii) on détermine le spectre Raman, portant l'énergie de la lumière diffusée en fonction du décalage en longueur d'onde par rapport au rayonnement lumineux incident,
(iv) on calcule :
   a) soit les intensités (aires ou hauteurs) de raies du spectre spécifiques :
      - de monomère(s) libre(s) non (co)polymérisé(s) dans le milieu réactionnel,
      - et du polymère obtenu ;
   b) soit les concentrations de monomère(s) libre(s) non (co)polymérisé(s) dans le milieu réactionnel et du polymère obtenu à partir du spectre Raman à l'aide de méthodes d'analyses spectrales quantitatives, de préférence ces méthodes étant des méthodes chimiométriques multivariables ;
(v) on calcule ensuite les données de procédé à partir soit des concentrations de monomère(s) libre(s) et du polymère obtenu, soit des intensités (aires ou hauteurs) de raies du spectre spécifiques de monomère(s) libre(s) dans le milieu réactionnel et du polymère obtenu;
(vi) on compare ces données de procédé avec des données de référence spécifiques du procédé d'obtention du latex aux propriétés prédéfinies ;
(vii) et on régule les paramètres réactionnels tels que la température, la pression, ragitation du milieu et l'alimentation en monomères afin de minimiser l'écart entre les données de procédé mesurées en ligne et les données de procédé de référence.

Dans le cadre de la présente invention, le spectromètre Raman peut être à transformée de Fourier ou à optique dispersive. Selon une variante particulièrement avantageuse, le spectromètre est à transformée de Fourier (FT-Raman).

L'une des caractéristiques avantageuses du procédé selon l'invention se situe notamment dans sa mise en oeuvre en continu ne nécessitant aucun prélèvement et/ou préparation d'échantillon au préalable.

Une deuxième caractéristique avantageuse du procédé selon l'invention-se situe dans la minimisation de sa sensibilité aux inhomogénéités locales éventuelles du milieu au sein du réacteur ; ceci étant dû principalement à la détermination simultanée des intensités de raies ou des concentrations de monomère(s) libre(s) et du polymère obtenu.

Une troisième caractéristique avantageuse de l'invention se situe dans l'adaptation parfaite du procédé selon l'invention pour un suivi direct en ligne effectué *in situ*.

Par suivi en ligne, on entend non seulement l'analyse directe en ligne de la (co)polymérisation par récupération de données de procédé calculées en temps réel, et définies à partir des spectres Raman mais aussi la régulation en ligne, c'est-à-dire, la régulation des paramètres réactionnels en fonction des données calculées afin d'optimiser le procédé pour obtenir un latex de qualités prédéterminées et adéquates pour son utilisation future.

Plus précisément, pour un latex donné que l'on souhaite obtenir, cette régulation s'opère afin de réduire l'écart au minimum, et de préférence à une valeur proche de zéro, entre les données de procédé et des données de référence, ces données de référence étant déterminées auparavant, et correspondant à celles que l'on observe dans le cas où le procédé est optimisé pour la préparation dudit latex aux qualités prédéterminées et souhaitées. Pour cela, les données de référence sont sélectionnées à partir d'essais expérimentaux conduisant aux latex aux propriétés souhaitées. Ces données de référence sont déterminées par mesure sur des échantillons prélevés en analyse "off-line" ou de préférence en analyse "on-line". Ces données de référence permettent ensuite l'établissement d'une courbe de référence pour ledit latex.

En d'autres termes, le suivi direct en ligne de la (co)polymérisation en émulsion par spectroscopie Raman, traduit dans une première étape, par le biais des spectres traités et transformés en données de procédé, l'état d'avancement de la (co)polymérisation à tout instant. Puis, dans une seconde étape, simultanée ou quasi simultanée, le suivi direct en ligne de la (co)polymérisation par spectroscopie Raman, permet la régulation des paramètres réactionnels du procédé de (co)polymérisation. Ainsi, le suivi en ligne permet d'améliorer la reproductibilité des procédés de (co)polymérisation et d'obtenir des latex avec des propriétés prédéterminées selon l'objectif souhaité.

Les calculs des données de procédé et des données de référence peuvent être établis selon diverses méthodes. A titre d'exemple, on peut suivre en fonction du temps , les données de procédés mentionnées ci-dessous :
(a) les intensités de raies du spectre Raman (aires ou hauteurs) spécifiques du monomère(s) et du polymère,
(b) la concentration en monomère Cm et la concentration en polymère Cp,
(c) le rapport entre les intensités de raies Raman (aires ou hauteurs) spécifiques du monomère(s) et les intensités de raies Raman (aires ou hauteurs) spécifiques du polymère,
(d) le rapport des concentrations entre monomère et polymère Cm/Cp,
(e) la conversion instantanée définie par Xi = Cp / (Cp + Cm),
(f) la conversion cumulée définie par Xc = Cp x Vtot / Mtot, où Vtot est le volume réactionnel du latex et Mtot est la masse de monomère totale engagée dans le procédé.

Les unités de ces données sont indifférentes ; toutefois, elles doivent être homogènes entre elles.

Selon une variante préférée de l'invention, les données de procédé qui permettent l'établissement de la courbe de référence sont établies à partir de la conversion instantanée Xi et de la conversion cumulée Xc.

Les données de référence Xi⁰ et Xc⁰ représentées sous forme d'une courbe Xi⁰ = F (Xc⁰) sont donc d'abord obtenues à partir d'essais ayant conduit aux caractéristiques souhaitées en vue de l'application future. Sur les essais ultérieurs faisant l'objet du suivi direct en ligne, les valeurs de Xi et de Xc obtenues en temps réel sont comparées à la courbe de référence.

Lorsqu'un écart est observé entre les données calculées Xi et Xc issues du procédé et les données de référence Xi⁰, Xc⁰, on régule par des actions de corrections sur les paramètres réactionnels de procédé afin de minimiser cet écart et, de ce fait, assurer une meilleure reproductibilité dudit procédé pour un latex donné.

A titre d'exemple, pour quantifier le gain de reproductibilité apporté par le contrôle en ligne de la polymérisation, il est possible de mesurer l'indice de dispersion (ID) qui détermine l'écart des données de procédé Xi, Xc et les données de référence Xi⁰, Xc⁰, et ce pour une série d'essais de polymérisation. On calculera cet indice de dispersion, qui caractérise la variabilité du procédé en analysant les données selon des méthodes statistiques bien connues telles que décrites dans Draper N.R., Smith H., 'Applied Regression Analysis', Second Edition, Wiley, 1981 ; Bates D.M., Watts D.G., *'Nonlinear Regression Analysis and its Applicafions*', Wiley, 1988 ; et Tomassone R., Lesquoy E., Miller C., 'La Regression, Nouveaux Regards sur une Ancienne Méthode Statistique', Masson, 1983.

Par (co)polymérisation, on entend désigner aux fins de la présente invention, aussi bien l'homopolymérisation des monomères éthyléniquement insaturés que leur copolymérisation.

La (co)polymérisation en émulsion désigne tout procédé de (co)polymérisation en émulsion, connu par l'homme du métier, mettant en jeu des monomères tels que définis ci-après, en présence d'agents émulsifiants et d'initiateurs de (co)polymérisation.

La nature des agents émulsifiants et des initiateurs n'est pas critique. Le procédé selon l'invention s'applique à tout procédé de (co)polymérisation en émulsion de monomères éthyléniquement insaturés en présence des initiateurs et des agents émulsifiants usuels de ces types de (co)polymérisation.

En ce qui concerne les méthodes d'analyses spectrales quantitatives, elles permettent de mesurer les intensités (aires ou hauteurs) de raies spécifiques du spectre ou de déterminer les concentrations de monomère(s) et du polymère, de préférence en utilisant des méthodes chimiométriques multivariables.

Pour les mesures directes d'intensité de raies du spectre Raman on peut, à titre d'exemples, mesurer les aires ou les hauteurs respectives suivantes :
- d'une part, à environ 1635 ± 100 cm⁻¹, raie associée à la vibration d'étirement de la double liaison carbone-carbone des monomères libres non encore (co)polymérisés,
- et d'autre part, à environ 1660 ± 100 cm⁻¹, raie associée aux vibrations d'étirement des double liaisons carbone-carbone incorporées dans la chaîne principale du polymère lorsque le mélange monomère contient au moins un composé diénique.

Par méthodes chimiométriques multivariables, on entend les techniques d'analyses multivariables connues de l'homme du métier telles que :
- la technique des moindres carrés partiels ("Partial Least Squares"),
- la technique d'analyse par "réseau de neurones".

On peut notamment se référer à ce sujet au document "Partial Least Squares Methods for Spectral Analyses" par Haaland D.M. et Thomas E.V., Anal. Chem. 1988, 60, 1193.

Selon une variante avantageuse de l'invention, le suivi direct en ligne est effectué en calculant les concentrations de monomère(s) libre(s) et du polymère obtenu par des méthodes d'analyses chimiométriques multivariables, ce calcul étant effectué par un ordinateur ayant en mémoire les équations établissant une corrélation entre les spectres Raman et les concentrations de monomère(s) libre(s) et du polymère obtenu et, les spectres Raman mesurés étant introduits dans ladite mémoire afin de calculer les concentrations de monomère(s) libre(s) et du polymère obtenu lors de la polymérisation.

En général, la fréquence des mesures enregistrées est adaptée en fonction de la vitesse d'évolution des données de procédé. Par exemple, les enregistrements sont réalisés à des intervalles compris entre 1 seconde et 30 minutes et, de préférence, entre 10 secondes et 10 minutes.

Comme monomères éthyléniquement insaturés, on utilise en général les monomères choisis dans le groupe constitué :
- du styrène et/ou ses dérivés, notamment les dérivés tels que l'alphaméthylstyrène ou le vinyltoluène ;
- des diènes tel que le butadiène, l'isoprène, le 2-chloro-1,3 butadiène ;
- des esters (méth)acryliques, ce terme désignant les esters de l'acide acrylique et de l'acide méthacrylique avec les alcools en C₁-C₁₂ hydrogénés ou fluorés, de préférence C₁-C₈, notamment l'acrylate de méthyle, l'acrylate d'éthyle, l'acrylate de propyle, l'acrylate de n-butyle, l'acrylate d'isobutyle, l'acrylate de 2-éthylehexyle, l'acrylate de tert-butyle, le méthacrylate de méthyle, le méthacrylate d'éthyle, le méthacrylate de n-butyle, le méthacrylate d'isobutyle ;
- des nitriles vinyliques, de préférence ceux ayant de 3 à 12 atomes de carbone, tel que l'acrylonitrile et le méthacrylonitrile ;
- des esters vinyliques d'acide carboxylique tels que l'acétate de vinyle, le versatate de vinyle, le propionate de vinyle ;
- des halogénures de vinyle ;
- et leur mélange.

D'autres monomères éthyléniquement insaturés, seuls ou en mélanges, (co)polymérisables avec les monomères ci-dessus, sont choisis dans le groupe constitué par :
- les acides mono- et di-carboxyliques insaturés éthyléniques comme l'acide acrylique, l'acide méthacrylique, l'acide itaconique, l'acide maléique, l'acide fumarique ;
- les mono-alkylesters des acides dicarboxyliques précités avec des alcanols, de préférence ayant de 1 à 4 atomes de carbone, et leurs dérivés N- substitués ;
- les amides des acides carboxyliques insaturés tels que l'acrylamide, le méthacrylamide, le N-méthylolacrylamide, le méthacrylamide, et les N-alkylacrylamides ;
- les monomères éthyléniques comportant un groupe acide sulfonique et ses sels alcalins ou d'ammonium tels que l'acide vinylsulfonique, l'acide vinyl-benzène sulfonique, l'acide alpha-acrylamido méthylpropane-sulfonique, le 2-sulfoéthylène-méthacrylate ;
- les monomères éthyléniques insaturés comportant un groupe amino secondaire, tertiaire ou quaternaire, ou un groupe hétérocyclique contenant de l'azote tels que par exemple les vinylpyridines, le vinylimidazole, les (méth)acrylates d'aminoalkyle et les (méth)acrylamides d'aminoalkyle comme le diméthylaminoéthyl-acrylate ou diméthyl-aminoéthyl-méthacrylate, le ditertiobutylaminoéthyl-acrylate ou le ditertiobutylamino-éthyl-méthacrylate, le diméthylaminométhyl-acrylamide ou diméthylaminométhylmétha-crylamide ;
- les monomères zwitterioniques tels que l'acrylate de sulfopropyl(diméthyl)amino propyle ;
- et leur mélange.

Selon une variante avantageuse de l'invention, le suivi direct en ligne est effectué par spectroscopie Raman à transformée de Fourier, et concerne la (co)polymérisation en émulsion aqueuse de styrène et de butadiène pour la préparation de latex type styrène-butadiène.

L'invention concerne également un dispositif pour le suivi direct en ligne *in situ* du procédé de préparation de latex aux propriétés prédéfinies par (co)polymérisation en émulsion de monomères éthyléniquement insaturés. Ce dispositif selon l'invention comprend :
(i) un réacteur comprenant au moins un moyen d'alimentation de monomères, de tensioactifs, d'amorceur de (co)polymérisation, et d'eau ;
(ii) au moins une sonde optique permettant d'analyser le contenu du réacteur ;
(iii) un spectromètre Raman ;
(iv) au moins une fibre optique
   · par laquelle un rayonnement lumineux incident de longueur d'onde comprise entre 200 nm et 1400 nm, et de préférence entre 700 nm et 1400 nm, est acheminé du spectromètre Raman vers la sonde optique,
   · et par laquelle la lumière diffusée par le milieu réactionnel est ré-acheminée vers le spectromètre fournissant le spectre Raman,
      la fibre optique étant identique ou différente pour l'acheminement et le ré-acheminement ;
(v) un calculateur, couplé au spectromètre, utilisant des méthodes d'analyse spectrale quantitative permettant de calculer à partir du spectre Raman :
   a) soit les intensités (aires ou hauteurs) de raies du spectre spécifiques
      - de monomère(s) libre(s) non (co)polymérisé(s) dans le milieu réactionnel
      - et du polymère obtenu,
   b) soit les concentrations de monomère(s) libre(s) non (co)polymérisé(s) dans le milieu réactionnel et du polymère obtenu à partir du spectre Raman à l'aide de méthodes d'analyses spectrales quantitatives, de préférence ces méthodes étant des méthodes chimiométriques multivariables ;
(vi) et un automate de régulation dans lequel est programmé au moins un algorithme mathématique permettant de réguler les paramètres réactionnels tels que la température, la pression, la vitesse d'agitation du milieu, et l'alimentation en monomères afin de minimiser l'écart entre les données de procédé mesurées en ligne et les données de procédé de référence ; les données de procédé étant basées sur une transformation algébrique soit des intensités de raies soit des concentrations de monomère(s) libre(s) et du polymère obtenu et, les données de référence, basées sur cette même transformation algébrique, étant des données spécifiques du procédé d'obtention du latex aux propriétés prédéfinies.

Le spectromètre Raman utilisé est de préférence un spectromètre à transformée de Fourier (FT-Raman), et comprend une source de rayonnement lumineux, un système optique interférométrique, un détecteur, un système électronique et un système informatique.

Ce spectromètre permet d'obtenir des spectres Raman donnant l'intensité de la lumière diffusée en fonction du décalage en longueur d'onde par rapport au rayonnement incident.

Plus précisément, le spectromètre à transformée de Fourier comprend avantageusement :
- une source de rayonnement lumineux destinée à provoquer une diffusion lumineuse par excitation photonique des molécules,
- un système optique interférométrique servant, entre autres, à filtrer la diffusion Rayleigh et à moduler le signal diffusé, modulation réalisée grâce à l'établissement d'interférences entre deux rayonnements lumineux,
- un détecteur transformant l'énergie lumineuse en énergie électrique,
- un système électronique qui a pour fonction, entre autres, de transformer le signal analogique en signal numérique utilisable par le système informatique,
- et un système informatique servant, entre autres, à piloter le spectromètre, à effectuer l'acquisition des données et à effectuer le traitement des données dont en particulier le transformée de Fourier inverse fournissant le spectre Raman.

Le calculateur couplé au spectromètre effectue un traitement des données mettant en oeuvre des mesures de l'intensité (aire ou hauteur) de certaines raies spécifiques du spectre de diffusion Raman ou une analyse chimiométrique de préférence multivariable. Cette analyse chimiométrique permet de déterminer à la fois les concentrations de monomère(s) présent(s) et du polymère . Dans ce dernier cas, le calculateur a en mémoire les équations établissant une corrélation entre les spectres Raman obtenus et la composition chimique du latex en cours de polymérisation. Ainsi, les spectres Raman mesurés sont introduits dans ladite mémoire et la composition chimique du latex en cours de polymérisation est alors calculée.

Le calculateur et le système informatique du spectromètre Raman peuvent former deux entités différentes et séparées, ou une seule entité.

La source de rayonnement lumineux utilisée pour l'irradiation incidente est monochromatique. Il s'agit de préférence d'un laser. On peut citer comme exemple de lasers possibles un laser à argon ionisé (514,5 nm) ou avantageusement un laser Nd: YAG (1064 nm). En général, la source de rayonnement lumineux émet une irradiation de longueur d'onde comprise entre 200 nm et 1400 nm, et de préférence entre 700 nm et 1400 nm.

Les sondes optiques pour l'analyse du contenu du réacteur peuvent être trouvées dans le commerce. A titre d'exemple, on citera la sonde RAMPROBE de la société BRUKER OPTIK (Allemagne). La sonde optique d'analyse est positionnée directement à proximité du réacteur indifféremment, soit au contact du milieu réactionnel, soit placée derrière une fenétre de façon à ce qu'il n'y ait aucun contact physique entre ladite sonde et le milieu réactionnel.

Toutefois, il est recommandé que la sonde optique soit positionnée de telle sorte qu'elle soit noyée dès le début de la polymérisation ; dans ces conditions, les mesures de suivi effectuées sont représentatives du procédé en cours.

La sonde optique disposée dans le réacteur est capable de résister aux pressions élevées développées en cours de polymérisation et aux dépressions appliquées avant polymérisation en vue d'éliminer l'oxygène du réacteur. En outre, la sonde doit être parfaitement étanche afin d'exclure toute fuite de monomère gazeux.

La sonde optique comporte de plus, de préférence, un ou plusieurs moyens destinés à atténuer et/ou à éliminer le(s) spectre(s) interférant(s). Ces moyens sont, notamment un premier moyen destiné à éliminer le spectre Raman produit par la fibre optique transportant l'irradiation incidente, et un deuxième moyen destiné à atténuer la diffusion Rayleigh des molécules sondées. En général, ces moyens sont des filtres optiques choisis notamment parmi les filtres holographiques, les filtres diélectriques et les filtres dichroïques.

L'automate de régulation est un appareil programmable constitué d'au moins un algorithme mathématique de régulation, ledit appareil étant en liaison avec le calculateur couplé au spectromètre Raman, permet d'agir en continu sur les paramètres du procédé pour reproduire de préférence un profil de conversion instantanée prédéterminé.

A titre d'exemple de fibres optiques pouvant être utilisées dans le cadre de l'invention, on peut citer les fibres de la société CIC Photonics Inc./USA, de la société C Technologies Inc./USA, de la société Sensotron Inc./USA, et de la société Dow Corning/USA.

Ces fibres sont habituellement des fibres de silice ou tout autre matériau ayant une faible section efficace de diffusion Raman et une faible absorption optique dans la gamme de longueurs d'onde utilisée.

En général, les fibres optiques du dispositif selon l'invention comportent des ports d'entrée et de sortie individuels et séparés par lesquels sont transmis les rayonnements incidents et diffusés.

Les exemples qui suivent sont destinés à illustrer le procédé et le dispositif selon l'invention.

### Exemples.

Les exemples ci-dessous sont réalisés dans un réacteur inox résistant à la pression, équipé d'un agitateur de type hélice et d'une contre-pale. La régulation thermique est assurée par cryothermostat qui contrôle la température d'un fluide gilotherme circulant dans une double enveloppe aménagée autour du réacteur. Les réactifs sont introduits au moyen de pompes volumétriques à membrane ; le débit de ces réactifs est contrôlé enpilotant la chute de poids des nourrices placées sur des balances.

Les paramètres réactionnels (débits réactifs, température et pression) sont contrôlés par un automate de régulation.

Une sonde FT-Raman ( Ramprobe, Bruker Optik, Allemagne) est installée en regard d'une fenêtre aménagée au travers de la double enveloppe du réacteur, à hauteur des pales de l'agitateur. La fenêtre est en quartz (Infrasil I, Heraeus, Allemagne).

Un joint en caoutchouc empêche toute lumière parasite d'interférer avec le signal enregistré par la sonde, et par ailleurs permet de diriger un flux d'air pour conserver une température inférieure de 5 à 15°C à celle du réacteur.

La sonde est reliée à un spectromètre Raman à transformée de Fourier (RFS 100/S, Bruker Optik, Allemagne) par une première fibre optique (sens aller) de transmission de l'irradiation laser incidente, et par une deuxième fibre optique (sens retour) de transmission de la diffusion Raman.

Le spectromètre est relié à un calculateur dans lequel sont stockées les équations de corrélations et l'algorithme de traitement chimiométrique des spectres Raman. Les concentrations des réactifs (monomères, polymères, eau, ...), déterminées grâce à l'analyse chimiométrique multivariable des spectres Raman du latex, sont transmises à l'algorithme de contrôle implanté dans l'automate de régulation.

### Exemple 1: Mise au point de la méthode d'analyse en ligne à partir des spectres Raman. pour la mesure de la concentration en monomères libres et de la concentration en polymère obtenu.

La méthode d'analyse est établie pour une réaction de polymérisation en émulsion styrène/butadiène/acide acrylique.

### A. Mode opératoire de la polymérisation.

Les charges de réactifs sont indiquées dans le tableau ci-dessous.

| Fraction | Ingrédients | Masse (g.) |
|---|---|---|
| | Eau | 1600 |
| | Persulfate de sodium | 12,1 |
| A | Hydrogénocarbonate de sodium | 11,5 |
| | Hydroxyde de sodium | 10,6 |
| | Anionic surfactant | 4,5 |
| | Acide acrylique | 63 |
| | Butadiène | 117 |
| | Styrène | 144 |
| | Styrène | 810 |
| B | Butadiène | 657 |
| | Ter-dodecylmercaptan | 18 |
| C | Persulfate de sodium | 6,5 |
| | Eau | 150 |

La fraction A est chargée à l'exception du styrène et du butadiène à une température de 30°C ; après avoir purgé le réacteur à l'azote, le mélange styrène et butadiène de la fraction A est chargé et la température est portée de 30°C à 75°C en 1 h. Dès que la température de 75°C est atteinte, la fraction B est additionnée sur 6h tout en contrôlant la température du réacteur à 75°C. Le milieu est maintenu à cette même température pendant 6 h supplémentaires pendant lesquelles la fraction C est introduite. Le réacteur est ensuite refroidi à température ambiante et dégazé.

### B. Analyse de la polymérisation.

Pendant la polymérisation, toutes les 30 mn des échantillons de latex sont prélevés sous pression et analysés par gravimétrie pour déterminer la concentration en polymère Cp, et par chromatographie gazeuse pour déterminer la concentration résiduelle en monomère Cm.

En parallèle, des spectres Raman sont enregistrés toutes les 6 mn dans les conditions suivantes : 200 scans et 8 cm⁻¹ de résolution. Ils sont stockés dans le calculateur puis analysés et comparés aux données de concentrations obtenues "off-line".

Un logiciel de chimiométrie basé sur la méthode PLS (Partial Least Squares) permet d'obtenir un jeu d'équations de corrélation servant à calibrer la méthode d'analyse .

### C. Résultats

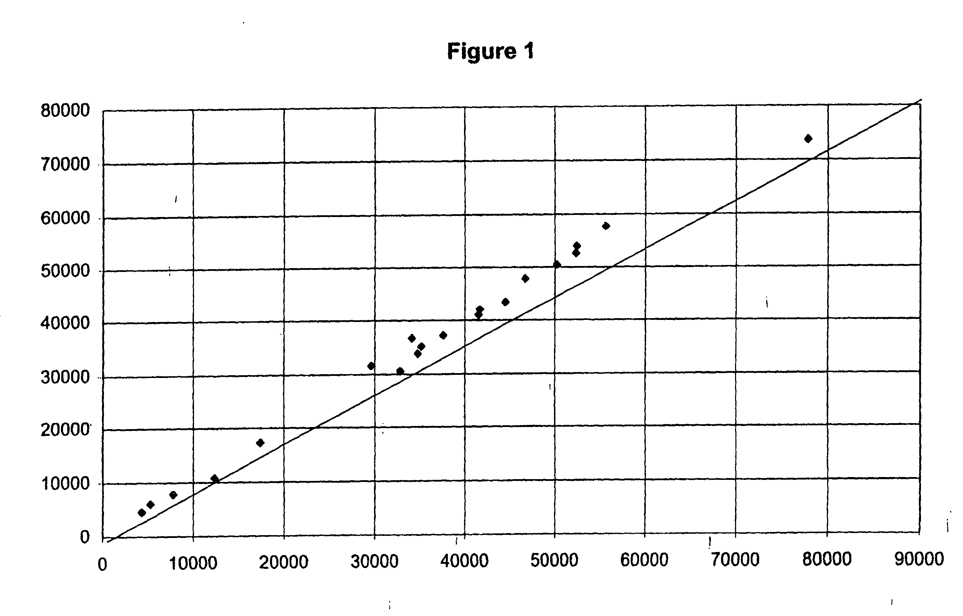

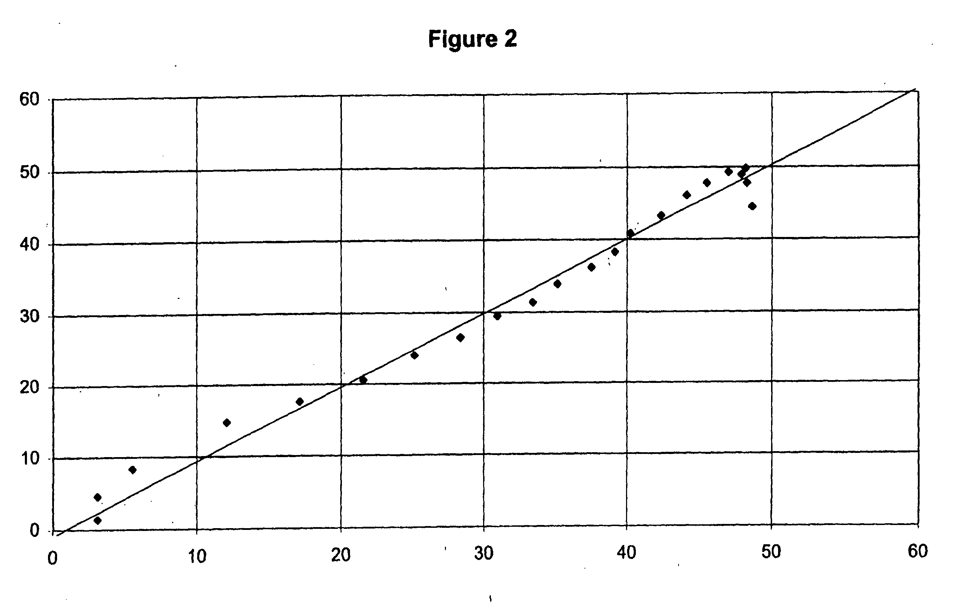

On obtient avec précision les concentrations en réactifs à partir des spectres Raman obtenus comme cela est illustré sur les figures 1 et 2 :
- figure 1 [abscisse : concentration en styrène mesurée par chromatographie "off-line" (ppm / masse de latex); ordonnée : concentration en styrène prédite par la calibration (ppm / masse de latex) ]
- et figure 2 [abscisse : concentration en polymère mesurée par gravimétrie "off-line" (% massique / masse de latex); ordonnée : concentration en polymère prédite par la calibration (% massique / masse de latex)].

### Exemple 2: Validation des méthodes d'analyse en ligne de l'exemple 1.

### A. polymérisation.

La polymérisation effectuée dans l'exemple 1 est reproduite à l'identique, hormis que le taux de persulfate est doublé.

### B. Analyse en ligne de la polymérisation.

Les spectres Raman enregistrés toutes les 6 mn sont traités en ligne dans le calculateur avec les équations de corrélation déterminées dans l'exemple 1, de façon à calculer les concentrations en monomère(s) et en polymère. De la même façon que dans l'exemple 1 des prélèvements sont effectués "off-line" pour analyser les concentrations en polymère et en monomère(s).

### C. Résultats

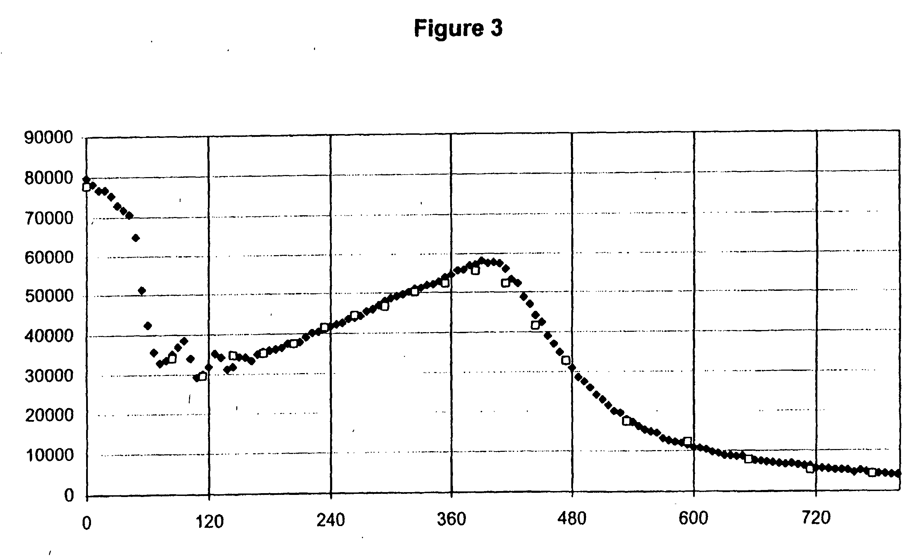

Les concentrations en fonction du temps sont données figure 3 [abscisse : temps de la réaction en mn ; ordonnée : carré blanc : concentration de styrène mesurée par chromatographie gazeuse "off-line" (ppm / masse de latex) ; losange foncé : concentration de styrène prédite par la calibration (ppm / masse de latex)].

Cet exemple illustre l'aptitude du dispositif à mesurer la concentration des réactifs en continu à partir des spectres Raman acquis en ligne, à partir des équations de corrélation établies dans l'exemple 1.

### Exemple 3: Mesure de la concentration en monomères libres par la méthode d'analyse en ligne de l'exemple 1.

### A. Modes opératoires de polymérisations.

### Exemple 3a:

Les charges des réactifs sont indiquées dans le tableau ci-dessous. La fraction A est chargée dans le réacteur à 30°C. Le réacteur est ensuite purgé à l'azote et sa température est amenée à 85°C en une heure. La fraction B est alors introduite en 260 mn et la fraction C en 420 mn.

Enfin le réacteur est refroidi à température ambiante et dégazé.. Le réacteur est agité à la vitesse de 175 tours / mn pendant toute la durée de l'essai.

| Fraction | Ingrédients | Masse (g.) |
|---|---|---|
| A | Eau | 1600 |
| | Latex à 30% d'extrait sec | 23 |
| | EDTA | 0,4 |
| | acide acrylique | 63 |
| B | Styrène | 1152 |
| | Butadiène | 576 |
| | Ter-dodécylmercaptan | 18 |
| C | Eau | 250 |
| | Persulfate de sodium | 18 |
| | Anionic surfactant | 10 |

### Exemple 3b :

Le mode opératoire de l'exemple 3b est identique à celui de l'exemple 3a ,à l'exception de la vitesse d'agitation qui est de 225 tours / mn.

### Exemple 3c :

Le mode opératoire de l'exemple 3c est identique à celui de l'exemple 3a ,à l'exception de la vitesse d'agitation qui est de 275 tours / mn.

### B. Analyse des polymérisations.

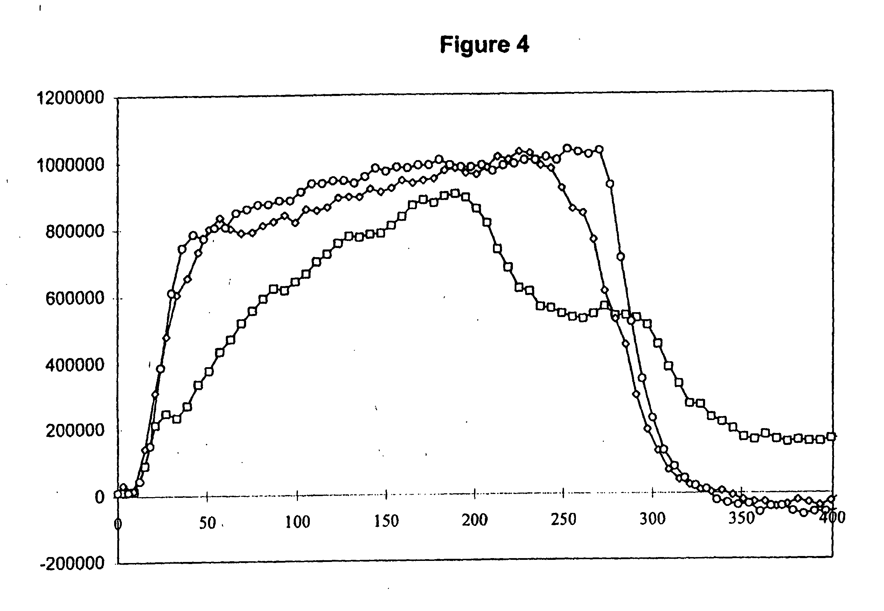

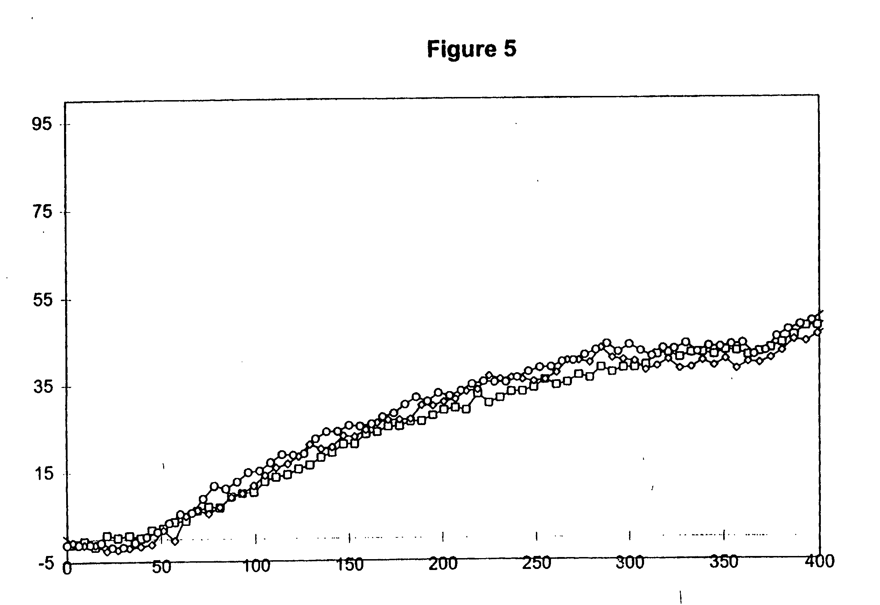

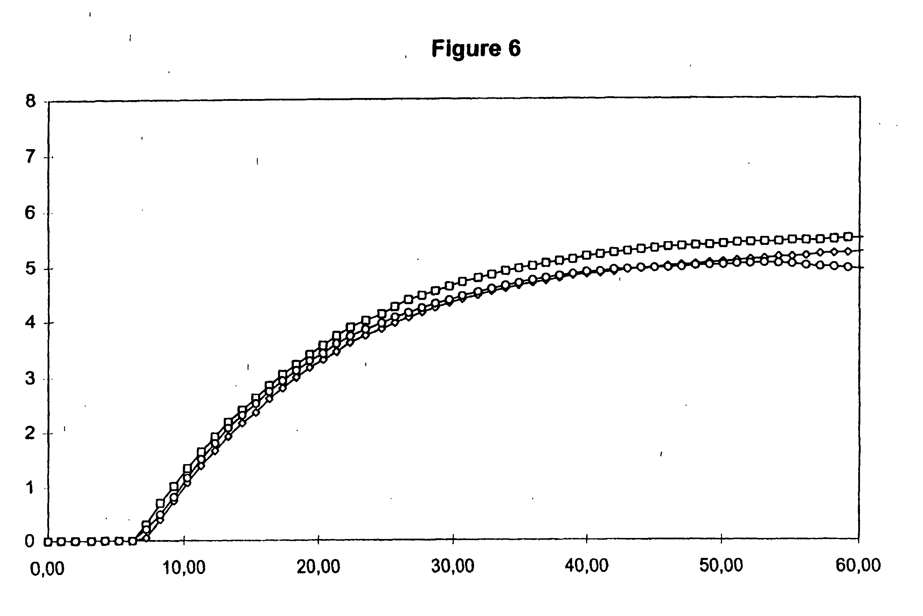

(i) Pour ces 3 exemples 3a, 3b et 3c, les spectres Raman sont enregistrés et traités en ligne toutes les 6 mn dans les conditions décrites à l'exemple 2, de façon à calculer les concentrations en monomère(s) et en polymère.
   Les calculs de concentration en styrène par rapport au temps sont donnés figure 4.
   Le temps de la réaction en mn est en abscisse. Les carrés blancs correspondent à les concentrations en styrène de l'exemple 3a (ppm / masse de latex) ; les losanges blancs sont pour les concentrations en styrène de l'exemple 3b (ppm / masse de latex) ; et les cercles blancs représentent les concentrations en styrène de l'exemple 3c (ppm/masse de latex)]
   La concentration en polymère par rapport au temps est donnée figure 5 [abscisse : temps de la réaction en mn ; ordonnée : carré blanc : concentration en polymère de l'exemple 3a (%massique/masse de latex) ; losange blanc: concentration en polymère de l'exemple 3b (%massique/masse de latex) ; cercle blanc : concentration en polymère de l'exemple 3c (%massique/masse de latex)].
(ii) Parallèlement, la pression régnant dans le ciel gazeux du réacteur est enregistrée pour ces 3 exemples.
   Les pressions en fonction du temps sont données figure 6 pour la première heure de polymérisation [abscisse : temps de la réaction en mn ; ordonnée : carré blanc : pression durant l'exemple 3a (bars) ; losange blanc : pression durant l'exemple 3b (bars) ; cercle blanc : pression durant l'exemple 3c (bars)].
   La pression dans le ciel gazeux est un indicateur qualitatif de l'avancement de la polymérisation dans le cas des latex styrène / butadiène : elle est d'autant plus élevée que la conversion est basse.

### C. Résultats.

D'après la figure 4, on constate a priori que pendant la première heure plus la vitesse d'agitation est faible, plus la concentration. en styrène libre est faible. Ceci signifierait que la conversion instantanée des monomères est d'autant plus forte que la vitesse d'agitation est faible.

Toutefois, ce point est totalement contredit par les données de la figure 6. En effet, sur cette figure, on constate que la pression n'est pas plus basse au début de l'essai 3a que de l'essai 3c. Les pressions sont en effet pratiquement équivalentes : ce qui signifie que la conversion n'est donc pas plus forte pendant la première heure pour l'exemple 3a.

Ceci est d'ailleurs confirmé par la figure 5 où sont représentées les variations de la concentration en polymère estimée à partir de la mesure Raman pour ces 3 mêmes essais , c'est à dire, la concentration en polymère, et donc aussi la conversion, est la même au cours des 3 essais en question.

Ces trois exemples montrent donc que si la qualité de l'agitation n'est pas suffisante pour assurer l'homogénéité du réacteur (par exemple une partie des monomères peut flotter à la surface du milieu réactionnel), la mesure correcte de la concentration en monomère(s) n'est pas possible. Ainsi, si l'on suit uniquement la mesure de la concentration de monomère(s) libre(s), on estime à tort que la conversion instantanée est forte par rapport aux données de référence Xᵢ⁰, ce qui va conduire à prendre des actions de correction erronées dans le cas d'une régulation. C'est à dire, l'introduction trop rapide ou trop lente de la fraction B, ce qui ne permet pas de garantir la reproductibilité du procédé et la qualité finale du latex.

### Exemple 4: Mesure de la concentration en polymère obtenu par la méthode d'analyse en ligne de l'exemple 1.

### A. Modes opératoires de polymérisations.

### Exemple 4a :

Le mode opératoire de polymérisation est identique à celui de l'exemple 1.

### Exemple 4b :

Le mode opératoire de polymérisation est identique à celui de l'exemple 1. Toutefois, la pompe devant introduire la fraction B n'a pas fonctionné correctement pendant une partie de la polymérisation (débit irrégulier).

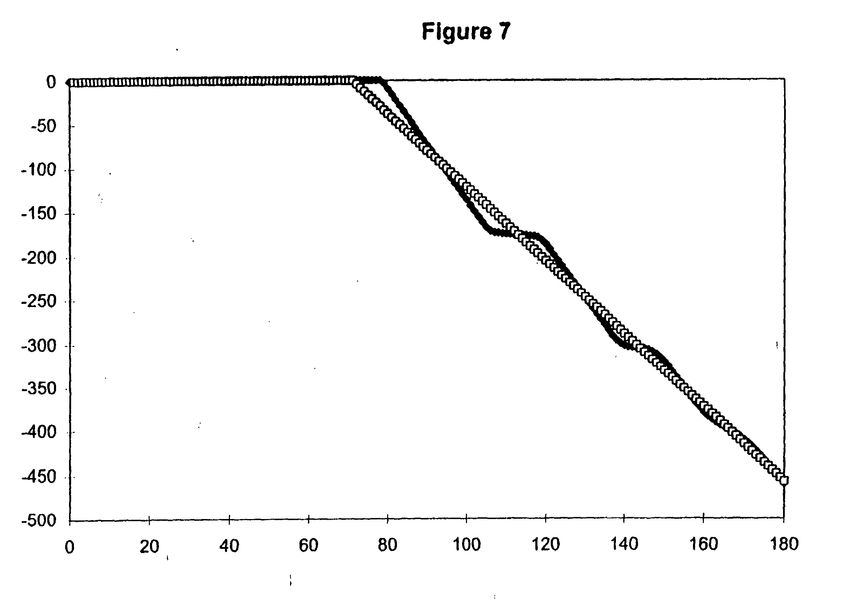

On constate la différence de comportement de la pompe sur la figure 7 [abscisse : temps (mn) ; ordonnée : carré blanc : perte de poids (g) de la nourrice contenant la fraction B durant l'exemple 4a ; losange foncé : : perte de poids (g) de la nourrice contenant la fraction B durant l'exemple 4b. La perte de poids est régulière dans le cas de l'exemple 4a alors que des oscillations sont visibles dans le cas de l'exemple 4b.

### B. Analyse des polymérisations.

Les spectres Raman enregistrés toutes les 6 mn sont traités en ligne dans le calculateur avec les équations de corrélations déterminées dans l'exemple 1, de façon à calculer les concentrations en monomère(s) et en polymère.

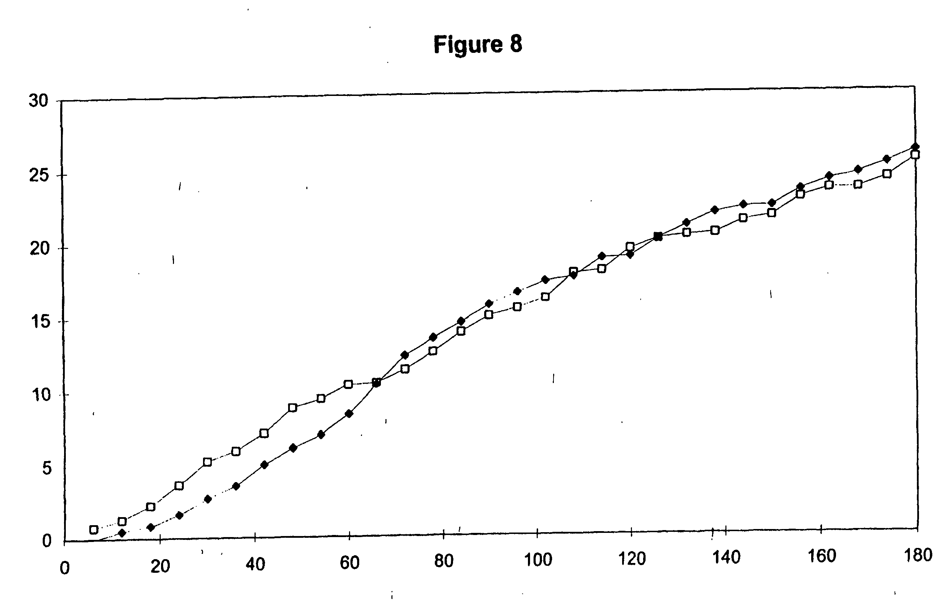

Les calculs de la concentration en polymère en fonction du temps sont donnés figure 8 [abscisse : temps de la réaction (mn) ; ordonnée : carré blanc : concentration en polymère pour exemple 4a (% massique / latex) ; losange foncé : concentration en polymère pour exemple 4b (% massique / latex)].

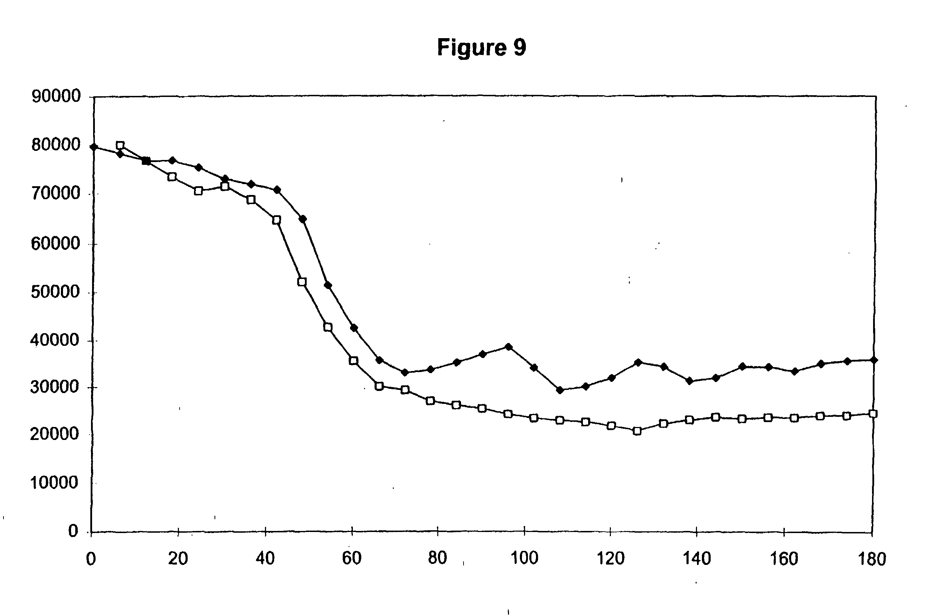

Les calculs de concentration en styrène en fonction du temps sont donnés figure 9 [abscisse : temps de la réaction (mn) ; ordonnée : carré blanc : concentration en styrène durant l'exemple 4a (ppm / latex) ; losange foncé : concentration en styrène durant l'exemple 4b (ppm / latex)].

### C. Résultats.

Sur la figure 8, les courbes de l'exemple 4a et de l'exemple 4b se superposent.

La mesure en ligne de la concentration en polymère dans le latex ne fait donc pas apparaître la différence des modes opératoires des exemples 4a et 4b (fonctionnement de la pompe).

Cette mesure ne permet pas d'anticiper sur les corrections nécessaires permettant d'obtenir des latex identiques dans les exemples 4a et 4b. Elle peut donc difficilement rendre compte à elle seule sur l'instant d'événements momentanés tels qu'un fonctionnement temporaire inadéquat d'une pompe d'alimentation.

Cet exemple montre que la seule mesure en ligne de la concentration en polymère ne permet pas de garantir la reproductibilité du procédé et la qualité finale du latex.

### Exemple 5: Mesure simultanée de la concentration en monomères libres et polymère obtenu selon la méthode de l'exemple 1.

Une série d'expériences, 5-1 à 5-10, est réalisée en reproduisant le mode opératoire de polymérisation de l'exemple 1.

L'analyse en ligne de la concentration en monomère et en polymère est effectuée dans des conditions identiques à celles de l'exemples 2. Les données de procédé Xi (conversion instantanée) et Xc (conversion cumulée) définies précédemment et calculées à partir des concentrations Cm et Cp mesurées simultanément en ligne, sont tracées sous la forme courbe Xi = f(Xc).

On obtient ainsi 10 courbes correspondant aux 10 essais de polymérisation. Les 10 courbes diffèrent de par la variabilité expérimentale inhérente au procédé. On cherche à établir une bande de confiance autour de la courbe de référence à partir de ces 10 essais, que l'on appellera indice de dispersion (ID). Pour cela on procède comme suit : la courbe de référence est calculée par ajustement à partir des 10 courbes expérimentales Xi = f(Xc) des essais 5-1 à 5-10 ; c'est donc une courbe moyenne dite de référence Xi⁰ = f(Xc⁰).

On construit une bande de confiance en calculant au préalable une estimation de l'erreur pure à partir de tous les résultats expérimentaux en appliquant la méthodologie décrite dans l'ouvrage suivant : Draper N.R., Smith H., Applied Regression Analysis, Second Edition, Wiley, 1981.

On calcule ainsi les limites hautes et basses de la bande de confiance simultanée de la courbe de référence. Le niveau de confiance choisi est de 99% (en d'autres termes, pendant une polymérisation, la valeur des données de procédé à l'instant considéré se situe à l'intérieur de la bande de confiance, cela signifie que la probabilité pour que le déroulement de la polymérisation ne soit pas significativement différent de celui correspondant à la courbe de référence est supérieure à 0.99).

L'indice de dispersion (ID) est l'aire de la bande de confiance calculée sur le domaine défini par une abscisse (Xc) variant de 0 à 1 et une ordonnée (Xi) variant de 0 à 1. On multiplie cette valeur brute par 1000. Plus l'ID est petit, moins le procédé est dispersé et en conséquence plus ce procédé est reproductible, donc plus fiable. Les calculs ont été effectués avec les modules SAS/STAT et SAS/IML du logiciel SAS version 6.12, (SAS Institute, USA). Les résultats sont donnés dans le tableau çi-dessous.

### Exemple 6. Procédé selon l'invention : mesure simultanée en ligne de la concentration en monomères libres et polymère obtenu selon la méthode de l'exemple 1 et régulation en ligne.

La série d'essais 6-11 à 6-20 est réalisée de façon identique à la série de l'exemple 5. Toutefois, la fraction B n'est plus introduite selon un profil prédéterminé ; en effet, un algorithme de contrôle est programmé dans l'automate de régulation pour piloter l'alimentation des monomères de la fraction B, de façon à minimiser l'erreur entre la courbe Xi = f (Xc), et la courbe de consigne Xi⁰ = f(Xc⁰).

L'algorithme de contrôle est basé sur une régulation de type PID ("régulation proportionnelle, intégrale et différentielle "). De la même façon, que pour la série d'essais 5-1 à 5-10, la méthode statistique présentée précédemment est utilisée pour calculer la bande de confiance sur les 10 essais et en déduire l'indice de Dispersion (ID). Les résultats sont donnés dans le tableau ci-dessous :

| **Référence des essais** | **Indice de dispersion (ID)** |
|---|---|
| 5-1 à 5-10 (sans régulation en ligne) | 87 |
| 6-11 à 6-20 (avec régulation en ligne) | 50 |

La comparaison des séries d'essais de l'exemple 5 et de l'exemple 6 fait apparaître un indice de dispersion (ID) beaucoup plus faible lorsque la polymérisation est conduite avec un contrôle en ligne, rendu possible grâce à l'analyse en ligne FT-Raman : le nouveau procédé faisant l'objet de l'invention est donc beaucoup plus reproductible et garantit de ce fait un niveau de performances constant.

## Revendications

1. Procédé de préparation de latex aux propriétés prédéfinies par (co)polymérisation en émulsion d'au moins une espèce de monomères éthyléniquement insaturés, **caractérisé en ce que** le procédé est effectué par un suivi en continu *in situ* de la (co)polymérisation comprenant les étapes suivantes :
(i) on émet dans l'émulsion un rayonnement lumineux incident compris dans la bande spectrale située entre 200 nm et 1400 nm, et de préférence entre 700 nm et 1400 nm,
(ii) on capte et on transmet à un spectromètre Raman la lumière diffusée par le milieu réactionnel,
(iii) on détermine le spectre Raman, portant l'énergie de la lumière diffusée en fonction du dèclage en longueur d'onde par rapport au rayonnement lumineux incident,
(iv) on calcule :
a) soit les intensités de raies du spectre spécifiques :
- de monomère(s) libre(s) non (co)polymérisé(s) dans le milieu réactionnel
- et du polymère obtenu,
b) soit les concentrations de monomère(s) libre(s) non (co)polymérisé(s) dans le milieu réactionnel et du polymère obtenu à partir du spectre Raman à l'aide de méthodes d'analyses spectrales quantitatives, de préférence ces méthodes étant des méthodes chimiométriques multivariables;
(v) on calcule les données de procédé à partir soit des concentrations de monomère(s) libre(s) et du polymère obtenu, soit des intensités de raies du spectre spécifiques de monomère(s) libre(s) dans le milieu réactionnel et des intensités de raies du spectre spécifiques du polymère obtenu;
(vi) on compare ces données de procédé avec des données de référence spécifiques du procédé d'obtention du latex aux propriétés prédéfinies ;
(vii) et on régule les paramètres réactionnels tels que la température, la pression, l'agitation du milieu et l'alimentation en monomères afin de minimiser l'écart entre les données de procédé mesurées en ligne et les données de procédé de référence.

2. Procédé selon la revendication 1, **caractérisé en ce que** le spectromètre Raman est à transformée de Fourier ou à optique dispersive, de préférence à transformée de Fourier (FT-Raman).

3. Procédé selon la revendication précédente, **caractérisé en ce que** le latex résulte de la (co)polymérisation en émulsion de monomères éthyléniquement insaturés, choisis dans le groupe constitué :
- du styrène et/ou de ses dérivés, notamment les dérivés tels que l'alphaméthylstyrène ou le vinyltoluène ;
- des diènes tels que le butadiène, l'isoprène, le 2-chloro-1,3 butadiène ;
- des esters (méth)acryliques, ce terme désignant les esters de l'acide acrylique et de l'acide méthacrylique avec les alcools en C₁-C₁₂ hydrogénés ou fluorés, de préférence C₁-C₈, notamment l'acrylate de méthyle, l'acrylate d'éthyle, l'acrylate de propyle, l'acrylate de n-butyle, l'acrylate d'isobutyle, l'acrylate de 2-éthylehexyle, l'acrylate de tert-butyle, le méthacrylate de méthyle, le méthacrylate d'éthyle, le méthacrylate de n-butyle, le méthacrylate d'isobutyle ;
- des nitriles vinyliques, de préférence ceux ayant de 3 à 12 atomes de carbone, tel que l'acrylonitrile et le méthacrylonitrile ;
- des esters vinyliques d'acide carboxylique tels que l'acétate de vinyle, le versatate de vinyle, le propionate de vinyle ;
- des halogenures de vinyle ;
- et leur mélange.

4. Procédé selon la revendication précédente, **caractérisé en ce que** l'émulsion, en outre, comprend d'autres monomères éthyléniquement insaturés, (co)polymérisables avec les monomères de la revendication précédente, choisis parmi le groupe constitué par :
- les acides mono- et di-carboxyliques insaturés éthyléniques comme l'acide acrylique, l'acide méthacrylique, l'acide itaconique, l'acide maléique, l'acide fumarique ;
- les mono-alkylesters des acides dicarboxyliques précités avec des alcanols, de préférence ayant de 1 à 4 atomes de carbone, et leurs dérivés N- substitués ;
- les amides des acides carboxyliques insaturés tels que l'acrylamide, le méthacrylamide, le N-méthylolacrylamide, le méthacrylamide, et les N-alkylacrylamides ;
- les monomères éthyléniques comportant un groupe acide sulfonique et ses sels alcalins ou d'ammonium tels que l'acide vinylsulfonique, l'acide vinyl-benzène sulfonique, l'acide alpha-acrylamido méthylpropane-sulfonique, le 2-sulfoéthylèneméthacrylate.
- les monomères éthyléniques insaturés comportant un groupe amino secondaire, tertiaire ou quaternaire, ou un groupe hétérocyclique contenant de l'azote tels que par exemple les vinylpyridines, le vinylimidazole, les (méth)acrylates d'aminoalkyle et les (méth)acrylamides d'aminoalkyle comme le diméthylaminoéthyl-acrylate ou diméthylaminoéthyl-méthacrylate, le ditertiobutylaminoéthyl-acrylate ou le ditertio butylaminoéthyl-méthacrylate, le diméthylaminométhyl-acrylamide ou diméthyl aminométhyl-méthacrylamide ;
- les monomères zwitterioniques tels que l'acrylate de sulfopropyl(diméthyl)amino propyle ;
- et leur mélange.

5. Procédé selon la revendication 4, **caractérisé en ce que** le suivi direct en ligne est effectué en continu pour la préparation de latex styrène-butadiène, par la (co)polymérisation en émulsion aqueuse du styrène avec le butadiène.

6. Procédé selon l'une quelconque des revendications précédentes, **caractérisé en ce que** le suivi direct en ligne est effectué pour la préparation de latex par (co)polymérisation en émulsion dans laquelle la phase continue est constituée d'eau.

7. Procédé selon l'une quelconque des revendications précédentes, **caractérisé en ce qu'**on calcule l'intensité des raies spécifiques du spectre de diffusion Raman :
- d'une part à environ 1635 ± 100 cm⁻¹, raie associée à la vibration d'étirement de la double liaison carbone-carbone des monomères libres non encore (co)polymérisés,
- et d'autre part à environ 1660 ± 100 cm⁻¹, raie associée aux vibrations d'étirement des double liaisons carbone-carbone incorporées dans la chaîne pcincipale du polymère obtenu, lorsque le mélange monomère contient au moins un composé diénique.

8. Procédé selon l'une des revendications 1 à 6, **caractérisé en ce que** le suivi direct en ligne est effectué en calculant les concentrations de monomère(s) libre(s) et du polymère obtenu par des méthodes d'analyses chimiométriques multivariables, ce calcul étant effectué par un ordinateur ayant en mémoire les équations établissant une corrélation entre les spectres Raman et les concentrations de monomère(s) libre(s) et du polymère obtenu et, les spectres Raman mesurés étant introduits dans ladite mémoire afin de calculer les concentrations de monomère(s) libré(s) et du polymère obtenu lors de la polymérisation.

9. Dispositif pour le suivi direct en ligne *in situ* du procédé de préparation de latex aux propriétés prédéfinies par (co)polymérisation en émulsion de monomères éthyléniquement insaturés selon l'une quelconque des revendications 1 à 8 comprenant :
(i) un réacteur comprenant au moins un moyen d'alimentation de monomères, de tensioactifs, d'amorceur de (co)polymérisation, et d'eau ;
(ii) au moins une sonde optique permettant d'analyser le contenu du réacteur ;
(iii) un spectromètre Raman ;
(iv) au moins une fibre optique
· par laquelle un rayonnement lumineux incident de longueur d'onde comprise entre 200 nm et 1400 nm, et de préférence entre 700 nm et 1400 nm, est acheminé du spectromètre Raman vers la sonde optique,
· et par laquelle la lumière diffusée par le milieu réactionnel est ré-acheminée vers le spectromètre fournissant le spectre Raman.
la fibre optique étant identique ou différente pour l'acheminement et le ré-acheminement ;
(v) un calculateur couplé au spectromètre permettant de calculer à partir du spectre Raman :
a) soit les intensités de raies du spectre spécifiques
- de monomère(s) libre(s) non (co)polymérisé(s) dans le milieu réactionnel
- et du polymère obtenu,
b) soit les concentrations des monomère(s) libre(s) non (co)polymérisé(s) dans le milieu réactionnel et du polymère obtenu à partir du spectre Raman à l'aide de méthodes d'analyses spectrales quantitatives, de préférence ces méthodes étant des méthodes chimiométriques multivariables ;
(vi) et un automate de régulation dans lequel est programmé au moins un algorithme mathématique permettant de réguler les paramètres réactionnels tels que la température, la pression, la vitesse d'agitation du milieu, et l'alimentation en monomères afin de minimiser l'écart entre les données de procédé mesurées en ligne et les données de procédé de référence ; les données de procédé étant basées sur une transformation algébrique soit des intensités de raies ou des concentrations de monomère(s) libre(s) et du polymère obtenu et, les données de référence, basées sur cette même transformation algébrique, étant des données spécifiques du procédé d'obtention du latex aux propriétés prédéfinies.

10. Dispositif selon la revendication précédente, **caractérisé en ce que** l'automate de régulation est un appareil programmable contenant au moins un algorithme mathématique, ledit appareil étant en liaison avec le calculateur couplé au spectromètre Raman, permet d'agir en continu sur les paramètres du procédé pour reproduire un profil de conversion instantanée prédéterminé.

11. Dispositif selon l'une quelconque des revendications 9 et 10, **caractérisé en ce que** le spectromètre Raman est à transformée de Fourier et comprend une source de rayonnement lumineux, un système optique interférométrique, un détecteur, un système électronique et un système informatique.

12. Dispositif selon l'une quelconque des revendications 9 à 11, **caractérisé en ce que** la sonde optique est positionnée directement à proximité du réacteur dans lequel la (co)polymérisation a lieu, indifféremment
- soit au contact du milieu réactionnel,
- soit placée derrière une fenêtre de façon à ce qu'il n'y ait aucun contact physique entre ladite sonde et le milieu réactionnel.

13. Dispositif selon l'une quelconque des revendications 9 à 12, **caractérisé en ce que** la sonde comporte un ou plusieurs moyens destinés à atténuer et/ou à éliminer le(s) spectre(s) interférant(s).

14. Dispositif selon la revendication précédente, **caractérisé en ce que** la sonde comporte un premier moyen destiné à éliminer le spectre Raman produit par la fibre optique transportant l'irradiation incidente, et un deuxième moyen destiné à atténuer la diffusion Rayleigh des molécules sondées.

15. Dispositif selon l'une quelconque des revendications 9 à 14, **caractérisé en ce que** les premier et deuxième moyens sont des filtres optiques choisis notamment parmi les filtres holographiques, les filtres diélectriques et les filtres dichroïques.

16. Dispositif selon l'une des revendications précédentes 9 à 15, **caractérisé en ce que** la transmission des rayonnements incident et diffusé se fait par l'intermédiaire des fibres optiques comportant des ports d'entrée et de sortie individuels et séparés.

## Patentansprüche

1. Verfahren zur Herstellung von Latex mit vordefinierten Eigenschaften durch Emulsions-(co)polymerisation mindestens einer Art von ethylenisch ungesättigten Monomeren, **dadurch gekennzeichnet, daß** das Verfahren unter kontinuierlicher *in situ*-Überwachung der (Co)polymerisation mit den folgenden Stufen durchgeführt wird:
(i) Man bestrahlt die Emulsion mit einer einfallenden Lichtstrahlung mit einer Spektralbande zwischen 200 nm und 1.400 nm, vorzugsweise zwischen 700 nm und 1.400 nm,
(ii) man fängt das durch das Reaktionsmedium gestreute Licht auf und überträgt es zu einem Raman-Spektrometer,
(iii) man bestimmt das Raman-Spektrum, welches die Energie des gestreuten Lichts in Abhängigkeit von der Wellenlängenverschiebung, bezogen auf die einfallende Lichtstrahlung, trägt,
(iv) man berechnet:
(a) entweder die Intensitäten spezifischer Linien des Spektrums:
- des oder der in dem Reaktionsmedium vorhandenen nicht-(co)polymerisierten freien Monomeren
- und des erhaltenen Polymeren,
(b) oder die Konzentrationen des (der) nicht-(co)polymerisierten freien Monomeren in dem Reaktionsmedium und des erhaltenen Polymeren, ausgehend von dem Raman-Spektrum mit Hilfe quantitativer Spektralanalysemethoden, wobei diese Methoden vorzugsweise multivariable chemometrische Methoden sind;
(v) man berechnet die Verfahrensdaten ausgehend entweder von den Konzentrationen des (der) freien Monomeren und des erhaltenen Polymeren, oder den Intensitäten der spezifischen Spektrallinien des (der) freien Monomeren in dem Reaktionsmedium und den Intensitäten der spezifischen Spektrallinien des erhaltenen Polymeren;
(vi) man vergleicht diese Verfahrensdaten mit spezifischen Referenzdaten des Verfahrens zur Bildung des Latex mit den vordefinierten Eigenschaften;
(vii) und man steuert die Reaktionsparameter, wie die Temperatur, den Druck, die Bewegung des Mediums und die Versorgung mit den Monomeren in der Weise, daß eine Abweichung zwischen den on-line gemessenen Verfahrensdaten und den Daten des Referenzverfahrens minimiert wird.

2. Verfahren nach Anspruch 1, **dadurch gekennzeichnet, daß** das Raman-Spektrometer ein Fourier Transformations- oder ein Streuoptik-Spektrometer umfaßt, vorzugsweise ein Fourier Transformations-Spektrometer (FT-Raman).

3. Verfahren nach dem vorhergehenden Anspruch, **dadurch gekennzeichnet, daß** der Latex durch die Emulsions-(co)polymerisation von ethylenisch ungesättigten Monomeren gebildet wird, die aus der folgenden Gruppe ausgewählt sind:
- Styrol und/oder seine Derivate, insbesondere Derivate, wie alpha-Methylstyrol oder Vinyltoluol;
- Diene, wie Butadien, Isopren, 2-Chlor-1,3-butadien;
- (Meth)acrylester, wobei dieser Begriff für Ester der Acrylsäure und der Methacrylsäure mit hydrierten oder fluorierten C₁-C₁₂-, vorzugsweise C₁-C₈-Alkoholen steht, insbesondere Methylacrylat, Ethylacrylat, Propylacrylat, n-Butylacrylat, Isobutylacrylat, 2-Ethylhexylacrylat, tert-Butylacrylat, Methylmethacrylat, Ethylmethacrylat, n-Butylmethacrylat, Isobutylmethacrylat;
- Vinylnitrile, vorzugsweise jene die 3 bis 12 Kohlenstoffatome aufweisen, wie Acrylnitril und Methacrylnitril;
- Carbonsäurevinylester, wie Vinylacetat, Vinylversatat, Vinylpropionat;
- Vinylhalogenide;
- und deren Mischung.

4. Verfahren nach dem vorhergehenden Anspruch, **dadurch gekennzeichnet, daß** die Emulsion zusätzlich weitere ethylenisch ungesättigte Monomere umfaßt, welche mit den Monomeren des vorhergehenden Anspruchs (co)polymerisierbar sind und die aus der folgenden Gruppe ausgewählt sind:
- ethylenisch ungesättigte Mono- und Dicarbonsäuren, wie Acrylsäure. Methacrylsäure, Itaconsäure, Maleinsäure, Fumarsäure;
- Monoalkylester der oben erwähnten Dicarbonsäuren mit Alkoholen, die vorzugsweise 1 bis 4 Kohlenstoffatome aufweisen und deren N-substituierte Derivate;
- Amide von ungesättigten Carbonsäuren, wie Acrylamid. Methacrylamid, N-Methylolacrylamid, Methacrylamid und N-Alkylacrylamide;
- ethylenische Monomere, die eine Sulfonsäuregruppe aufweisen und deren Alkali- oder Ammonium-Salze, wie Vinylsulfonsäure, Vinylbenzolsulfonsäure, alpha-Acrylamido-methylpropansulfonsäure, 2-Sulfoethylen-methacrylat;
- ethylenisch ungesättigte Monomere, die eine sekundäre, tertiäre oder quaternäre Aminogruppe oder einen stickstoffhaltigen Heterocyclus tragen, wie beispielsweise Vinylpyridine, Vinylimidazol, Aminoalkyl-(meth)-acrylate und Aminoalkyl-(meth)acrylamide, wie Dimethylaminoethyl-acrylat oder Dimethylaminoethyl-methacrylat, Ditertbutylaminoethyl-acrylat oder Ditertbutylaminoethyl-methacrylat, Dimethylaminomethyl-acrylamid oder Dimethylaminomethyl-methacrylamid;
- zwitterionische Monomere, wie Sulfopropyl(dimethyl)aminopropyl-acrylat;
- und deren Mischung.

5. Verfahren nach Anspruch 4, **dadurch gekennzeichnet, daß** die direkte on-line-Überwachung kontinuierlich durchgeführt wird für die Herstellung von Styrol-Butadien-Latex durch (Co)polymerisation von Styrol mit Butadien in wässriger Emulsion.

6. Verfahren nach einem der vorhergehenden Ansprüche, **dadurch gekennzeichnet, daß** die direkte on-line-Überwachung bewirkt wird für die Herstellung des Latex durch Emulsions-(co)polymerisation, wobei die kontinuierliche Phase durch Wasser gebildet wird.

7. Verfahren anch einem der vorhergehenden Ansprüche, **dadurch gekennzeichnet, daß** man die Intensität der spezifischen Linien des Raman-Streuspektrums mißt:
- einerseits bei etwa 1635 ± 100 cm⁻¹ die Linie, die mit der Streckschwingung der Kohlenstoff-Kohlenstoff-Doppelbindung der freien, noch nicht (co)polymerisierten Monomeren verbunden ist,
- und andererseits bei etwa 1660 ± 100 cm⁻¹ die Linie, die mit den Streckschwingungen der Kohlenstoff-Kohlenstoff-Doppelbindungen verknüpft ist, die in der Hauptkette des erhaltenen Polymers vorliegen, wenn die Monomermischung mindestens eine Dienverbindung enthält.

8. Verfahren nach einem der Ansprüche 1 bis 6, **dadurch gekennzeichnet, daß** die direkte on-line-Überwachung in der Weise erfolgt, daß die Konzentrationen des (der) freien Monomeren und des erhaltenen Polymeren durch multivariable chemometrische Analysenmethoden berechnet werden, wobei diese Berechnung mit Hilfe eines Rechners erfolgt, der in seinem Speicher Gleichungen aufweist, welche eine Korrelation zwischen den Raman-Spektren und den Konzentrationen des (der) freien Monomeren und des erhaltenen Polymeren enthält, und wobei die gemessenen Raman-Spektren in den Speicher eingeführt werden zur wobei die gemessenen Raman-Spektren in den Speicher eingeführt werden zur Berechnung der Konzentration des (der) freien Monomeren und des bei der Polymerisation erhaltenen Polymeren.

9. Vorrichtung zur direkten *in situ* on-line-Überwachung des Verfahrens zur Herstellung von Latex mit vordefinierten Eigenschaften durch Emulsions-(co)polymerisation von ethylenisch ungesättigten Monomeren gemäß einer der Ansprüche 1 bis 8, umfassend:
(i) Einen Reaktor, der mindestens eine Einrichtung zur Versorgung mit Monomeren, oberflächenaktiven Mitteln (Co)polymerisationsinitiator und Wasser umfaßt;
(ii) mindestens eine optische Sonde, welche die Analyse des Reaktorinhalts ermöglicht;
(iii) ein Raman-Spektrometer;
(iv) mindestens einen Lichtwellenleiter (Faseroptik)
• mit dem die einfallende Lichtstrahlung mit einer Wellenlänge zwischen 200 nm und 1.400 nm, vorzugsweise zwischen 700 nm und 1.400 nm über die optische Sonde zu dem Raman-Spektrometer geführt wird,
• und mit der das durch das Reaktionsmedium gestreute Licht zu dem das Raman-Spektrum liefernde Spektrometer zurückgeführt wird,
wobei der Lichtwellenleiter für die Zuführung und die Rückführung identisch oder unterschiedlich ist;
(v) einen mit dem Spektrometer gekoppelten Rechner, welcher es ermöglicht, ausgehend von dem Raman-Spektrum folgendes zu berechnen:
a) Entweder die Intensitäten von spezifischen Spektrallinien
- des (der) nicht-(co)polymerisierten freien Monomeren in dem Reaktionsmedium
- und des erhaltenen Polymeren,
b) oder die Konzentration des (der) nicht-(co)polymerisierten freien Monomeren in dem Reaktionsmedium und des erhaltenen Polymeren ausgehend von dem Raman-Spektrum mit Hilfe quantitativer Spektralanalysenmethoden, wobei diese Methoden vorzugsweise multivariable chemometrische Methoden sind;
(vi) und einen Steuerautomaten, in dem mindestens ein mathematischer Algorithmus programmiert ist, welcher die Steuerung der Reaktionsparameter, wie die Temperatur, den Druck, die Bewegung des Mediums und die Versorgung mit den Monomeren, ermöglicht, um in diese Weise die Abweichung zwischen den on-line-gemessenen Verfahrensdaten und den Daten des Referenzverfahrens zu minimieren, wobei die Verfahrensdaten auf einer algebraischen Transformation entweder der Intensitäten der Linien oder der Konzentrationen des (der) freien Monomeren und des erhaltenen Polymeren beruhen, und die Referenzdaten, die auf dieser gleichen algebraischen Transformation beruhen, spezifische Daten des Verfahrens zur Herstellung des Latex mit den vordefinierten Eigenschaften sind.

10. Vorrichtung nach dem vorhergehenden Anspruch, **dadurch gekennzeichnet, daß** der Steuerautomat eine programmierbare Vorrichtung ist, die mindestens einen mathematischen Algorithmus enthält, welche Vorrichtung mit dem Rechner verbunden ist, der mit dem Raman-Spektrometer gekoppelt ist und es ermöglicht, kontinuierlich auf die Parameter des Verfahrens einzuwirken, um ein vorbestimmtes augenblickliches Umwandlungsprofil zu reproduzieren.

11. Vorrichtung nach einem der Ansprüche 9 und 10, **dadurch gekennzeichnet, daß** das Raman-Spektrometer ein Fourier Transformationsspektrometer ist und eine Quelle für Lichtstrahlung, ein optisches interferometrisches Systen, einen Detektor, ein elektronisches System und ein Rechnersystem umfaßt.

12. Vorrichtung nach einem der Ansprüche 9 bis 11, **dadurch gekennzeichnet, daß** die optische Sonde direkt in der Nähe des Reaktors angeordnet ist, in dem die (Co)polymerisation erfolgt, unabhängig voneinander
- entweder in Kontakt mit dem Reaktionsmedium,
- oder hinter einem Fenster in der Weise, daß kein physikalischer Kontakt zwischen der Sonde und dem Reaktionsmedium erfolgt, angeordnet ist.

13. Vorrichtung nach einem der Ansprüche 9 bis 12, **dadurch gekennzeichnet, daß** die Sonde eine oder mehrere Einrichtungen umfaßt zur Dämpfung und/oder Eliminierung von dem (den) interferierenden Spektrum (Spektren).

14. Vorrichtung nach dem vorhergehenden Anspruch, **dadurch gekennzeichnet, daß** die Sonde eine erste Einrichtung umfaßt, die dazu dient, das durch die optische Faser, welche die einfallende Strahlung transportiert, produzierte Raman-Spektrum zu eliminieren, und eine zweite Einrichtung zur Dämpfung der Rayleigh-Streuung der überwachten Moleküle.

15. Vorrichtung nach einem der Ansprüche 9 bis 14, **dadurch gekennzeichnet, daß** die ersten und zweiten Einrichtungen optische Filter sind, die insbesondere aus holographischen Filtern, dielektrischen Filtern und dichroitischen Filtern ausgewählt sind.

16. Vorrichtung nach einem der vorhergehenden Ansprüche 9 bis 15, **dadurch gekennzeichnet, daß** die Übertragung der einfallenden gestreuten Strahlungen mit Hilfe von optischen Fasern erfolgt, welche individuelle und getrennte Eintritts- und Austritts-Öffnungen umfassen.

## Claims

1. Process for preparing latex with predefined properties by (co)polymerisation in an emulsion of at least one type of ethylenically unsaturated monomers, **characterised in that** the process is conducted by a continuous monitoring in situ of the (co)polymerisation comprising the following steps:
i. a radiation of incident light included in the spectral band located between 200 nm and 1400 nm, and preferably between 700 nm and 1400 nm, is emitted into the emulsion,
ii. the light diffused through the reaction medium is detected and transmitted to a Raman spectrometer,
iii. the Raman spectrum is determined, entering the energy of the diffused light as a function of the shift in wavelength in relation to the radiation of incident light,
iv. the following are calculated:
a) either the intensities of the specific spectral lines:
- of free non-(co)polymerised monomer(s) in the reaction medium
- and of the polymer obtained,
b) or the concentrations of free non-(co)polymerised monomer(s) in the reaction medium and of the polymer obtained,
from the Raman spectrum using methods of quantitative spectral analysis, these methods preferably being multivariable chemiometric methods,
v. the process data are calculated either from concentrations of free monomer(s) and of the polymer obtained or from intensities of the specific spectral lines of free monomer(s) in the reaction medium and intensities of specific spectral lines of the polymer obtained,
vi. these process data are compared with specific reference data of the process for obtaining latex with predefined properties,
vii. and the reaction parameters such as temperature, pressure, agitation of the medium and feed of monomers, are controlled to minimise the difference between the process data measured online and the reference process data.

2. Process according to Claim 1, **characterised in that** the Raman spectrometer is a Fourier transform or optical dispersive spectrometer, preferably a Fourier transform spectrometer (FT Raman).

3. Process according to the preceding claim, **characterised in that** the latex results from the (co)polymerisation in an emulsion of ethylenically unsaturated monomers selected from the group comprising:
• styrene and/or its derivatives, in particular derivatives such as alphamethyl styrene or vinyl toluene;
• dienes such as butadiene, isoprene, 2-chloro-1,3-butadiene;
• (meth)acrylic esters, this term representing acrylic and methacrylic acid esters with hydrogenated or fluorinated alcohols with C₁-C₁₂, preferably C₁-C₈, in particular methyl acrylate, ethyl acrylate, propyl acrylate, n-butyl acrylate, isobutyl acrylate, 2-ethylhexyl, tert-butyl acrylate, methyl methacrylate, ethyl methacrylate, n-butyl methacrylate, isobutyl methacrylate;
• vinyl nitriles, preferably those having 3 to 12 carbon atoms such as acrylonitrile and methacrylonitrile;
• carboxylic acid vinyl esters such as vinyl acetate, vinyl versatate, vinyl propionate;
• vinyl halides;
• and a mixture thereof.

4. Process according to the preceding claim, **characterised in that** the emulsion additionally comprises other ethylenically unsaturated monomers, which can be (co)polymerised with the monomers of the preceding claim selected from the group comprising:
• unsaturated ethylene mono- or di-carboxylic acids such as acrylic acid, methacrylic acid, itaconic acid, maleic acid, fumaric acid;
• mono-alkyl esters of the above-cited dicarboxylic acids with alkanols preferably having 1 to 4 carbon atoms and their N-substituted derivatives;
• amides of unsaturated carboxylic acids such as acrylamide, methacrylamide, N-methylol acrylamide, methacrylamide and N-alkyl acrylamides;
• ethylene monomers forming a sulphonic acid group and its alkaline and ammonium salts such as vinyl sulphonic acid, vinyl benzene sulphonic acid, alpha-acrylamido methylpropane sulphonic acid, 2-sulphoethylene methacrylate;
• unsaturated ethylene monomers forming a secondary, tertiary or quaternary amino group, or a heterocyclic group containing nitrogen such as, for example, vinyl pyridines, vinyl imidazole, amino alkyl (meth)acrylates and amino alkyl (meth)acrylamides such as dimethyl amino ethyl acrylate or dimethyl amino ethyl methacrylate, ditertiobutyl amino ethyl acrylate or ditertiobutyl amino ethyl methacrylate, dimethyl amino methyl acrylamide or dimethyl amino methyl methacrylamide;
• zwitterionic monomers such as sulphopropyl(dimethyl) amino propyl;
• and a mixture thereof.

5. Process according to Claim 4, **characterised in that** the direct online monitoring is conducted continuously for the preparation of styrene butadiene latex by (co)polymerisation in an aqueous emulsion of styrene with butadiene.

6. Process according to any one of the preceding claims, **characterised in that** the direct online monitoring is conducted for the preparation of latex by (co)polymerisation in an emulsion, in which the continuous phase is formed by water.

7. Process according to any one of the preceding claims, **characterised in that** the intensity of the specific spectral lines of the Raman scattering are calculated:
• on the one hand, at approximately 1635 ± 100 cm⁻¹, said line being associated with the expansion vibration of the double carbon-carbon bond of the free monomers not yet (co)polymerised,
• and on the other hand, at approximately 1660 ± 100 cm⁻¹, said line being associated with expansion vibrations of the double carbon-carbon bonds incorporated into the main chain of the polymer obtained, when the monomer mixture contains at least one diene component.

8. Process according to one of Claims 1 to 6, **characterised in that** the direct online monitoring is conducted by calculating the concentrations of free monomer(s) and of the polymer obtained by multivariable chemiometric methods of analysis, this calculation being conducted by a computer with memory containing equations establishing a correlation between the Raman spectra and the concentrations of free monomer(s) and of the polymer obtained, the measured Raman spectra being input into said memory in order to calculate the concentrations of free monomer(s) and of the polymer obtained during polymerisation.

9. Apparatus for direct online monitoring in situ of the process for preparing latex with predefined properties by (co)polymerisation in an emulsion of ethylenically unsaturated monomers according to any one of Claims 1 to 8, comprising:
i. a reactor comprising at least one means for feeding monomers, surfactants, activator of (co)polymerisation and water;
ii. at least one optical probe to enable the contents of the reactor to be analysed;
iii. a Raman spectrometer;
iv. at least one optical fibre
- via which an incident light radiation with a wavelength in the range of between 200 nm and 1400 nm, preferably 700 nm and 1400 nm, is forwarded from the Raman spectrometer towards the optical probe,
- and via which the light diffused by the reaction medium is re-forwarded to the spectrometer supplying the Raman spectrum,
the optical fibre used for forwarding and re-forwarding being identical or different;
v. a calculator coupled to the spectrometer to enable the following to be calculated from the Raman spectrum:
a) either the intensities of the specific spectral lines:
- of free non-(co)polymerised monomer(s) in the reaction medium
- and of the polymer obtained,
b) or the concentrations of free non-(co)polymerised monomer(s) in the reaction medium and of the polymer obtained,
from the Raman spectrum using methods of quantitative spectral analysis, these methods preferably being multivariable chemiometric methods,
vi. and an automatic regulator, in which at least one mathematical algorithm is programmed to allow regulation of the reaction parameters such as temperature, pressure, agitation of the medium and feed of monomers, are controlled to minimise the difference between the process data measured online and the reference process data;
wherein the process data are based on an algebraic transformation either of the line intensities or of the concentrations of the free monomer(s) and of the polymer obtained, and the reference data are based on this same algebraic transformation since they are specific data of the process for obtaining latex with predefined properties.

10. Apparatus according to the preceding claim, **characterised in that** the automatic regulator is a programmable device containing at least one mathematical algorithm, wherein said device is linked to the calculator coupled to the Raman spectrometer and is thus capable of acting continuously on process parameters to reproduce a predetermined instantaneous conversion profile.

11. Apparatus according to any one of Claims 9 and 10, **characterised in that** the Raman spectrometer is a Fourier transform spectrometer and comprises a source of light radiation, an optical interferometry system, a detector, an electronic system and a data-processing system.

12. Apparatus according to any one of Claims 9 to 11, **characterised in that** the optical probe is positioned in direct proximity to the reactor, in which the (co)polymerisation takes place, equally
- either in contact with the reaction medium
- or placed behind a window so that there is no physical contact between said probe and the reaction medium.

13. Apparatus according to any one of Claims 9 to 12, **characterised in that** the probe comprises one or more means for attenuating and/or eliminating an interfering spectrum or spectra.

14. Apparatus according to the preceding claim, **characterised in that** the probe comprises a first means for eliminating the Raman spectrum produced by the optical fibre transporting the incident irradiation, and a second means for attenuating the Rayleigh scattering of probed molecules.

15. Apparatus according to any one of Claims 9 to 14, **characterised in that** the first and second means are optical filters selected in particular from holographic filters, dielectric filters and dichroic filters.

16. Apparatus according to one of the preceding Claims 9 to 15, **characterised in that** the transmission of incident and diffused radiation is achieved by means of the optical fibres having individual and separate inlet and outlet ports.
